# EUROPEAN PATENT APPLICATION

(11) **EP 4 116 151 A1**
(43) Date of publication of application: **11.01.2023**
(21) Application number: 22182292.7
(22) Date of filing: 30.06.2022
(51) Int. Cl.: B60R 16/023

(54) **INTEGRATED MODULAR OVERHEAD CONSOLE SYSTEM**

(30) Priority: 08.07.2021 US 202163219593 P; 27.06.2022 US 202217809197
(71) Applicant: Volvo Car Corporation, 40531 Göteborg (SE)
(72) Inventor: Andersson, Markus Lars Edvin, 40531 Göteborg (SE); Basualdo, Egoi Sanchez, 40531 Göteborg (SE); Razek, Ahmed, 40531 Göteborg (SE); Ohlsson, Karl Gunnar, 40531 Göteborg (SE)
(74) Representative: Maiwald GmbH

(57) **Abstract**

One or more embodiments described herein relate to a modular multifunctional system for a vehicle, and more specifically, to a versatile sensor system integrated into a modular overhead console. Multiple systems and functions are consolidated into particular overhead units to allow for increase space inside a vehicle, decreased design restrictions, and the use of a single type of modular overhead console in multiple vehicle types and models.

## Description

### CROSS-REFERENCE TO RELATED APPLICATION

### TECHNICAL FIELD

One or more embodiments described herein relate to a modular multifunctional system for a vehicle, and more specifically, to a versatile sensor system integrated into a modular overhead console (OHC) system.

### BACKGROUND

Glass roofs maximize natural light inside a vehicle and make commutes more enjoyable. Likewise, complex sensor systems require the tandem operation of many electronic control units (ECUs), components, through cabled connections that limit space and natural light. Contemporary solutions to meet demand for greater space and natural light have led to limited integrations or dispersals of these systems resulting in difficulties for assembly and servicing.

### SUMMARY

The following presents a summary to provide a basic understanding of one or more embodiments described herein. This summary is not intended to identify key or critical elements, or to delineate any scope of the particular embodiments and/or any scope of the claims. The sole purpose of the summary is to present concepts in a simplified form as a prelude to the more detailed description that is presented later. In one or more embodiments described herein, devices, systems, methods and/or apparatuses are described that consolidate mechanical, mechatronic, and software/hardware into a modular OHC centralized system.

Vehicle sensor systems have increased in complexity and have thus placed limits on vehicle design. Components of these systems are commonly found throughout a vehicle's rooftop. Therefore, typical implementations make further incorporations of glass in rooftops ineffective at increasing natural light for drivers and passengers to enjoy. Contemporary solutions to enable more glass in vehicle rooftops without sacrificing functionality have not led to fully combined integrations of the mechanical, mechatronic, and software/hardware levels. In pursuing the higher level of integration in a modular OHC system to allow for utilization of more glass in vehicle rooftops, the overall system decreases in complexity and allows for dynamic integrations of features and configurations across a variety vehicle designs.

According to an embodiment, a vehicle control system can comprise a processor that executes computer executable components stored in memory and a modular overhead component. The modular overhead component can determine type model and functionality associated with a vehicle and self-configure to provision one or more functionalities and services associated with the vehicle. An advantage of such a system is that it can enable usage of the same modular OHC design in multiple vehicle types and models, thereby decreasing production, design and maintenance costs.

In one or more of the above embodiments, the modular OHC can further couple to an interior portion of the vehicle associated with the vehicle control system. An advantage of such a system is that it enables an operator or passenger of the vehicle to interact with the modular OHC.

In one or more of the above embodiments, the modular OHC can wirelessly communicate with components of the vehicle. An advantage of such a system is that the modular OHC can work together with the components to enable one or more functionalities and services associated with the vehicle.

In one or more of the above embodiments, the modular OHC can comprise one or more components to provide one or more functionalities to the vehicle. An advantage of such a system is that components can be concentrated into the modular OHC to increase space within the vehicle and to decrease the amount of mounting points, data cables and power cables utilized when components are spread throughout the vehicle.

In one or more of the above embodiments, the modular OHC can provision power to one or more vehicle components. An advantage of such a system is that it decreases the amount and length of power cables running through the vehicle.

In one or more of the above embodiments, the modular OHC can provide functionalities for a defined portion of the vehicle. An advantage of such a system is that components for the defined portion of the vehicle can be concentrated into the modular OHC to increase space within the vehicle and to decrease the number of mounting points, data cables and power cables utilized when components are spread throughout the vehicle.

In one or more of the above embodiments, the modular OHC can determine type, model and functionality associated with the vehicle based on a pin configuration coupling the vehicle to the modular overhead console. An advantage of such a system is that it enables the use of a single type of modular OHC in multiple types and models of vehicles, thereby leading to decreased production cost and easier maintenance of the vehicle.

In one or more of the above embodiments, the modular OHC can comprise one or more sensors. An advantage of such a system is that it the one or more sensors can be utilized to enable one or more functionalities or services associated with the vehicle.

According to an embodiment, a computer-implemented method can comprise determining type, model and functionality associated with a vehicle, and configuring a modular OHC to provision one or more functionalities and services associated with the vehicle. An advantage of such a computer-implemented method is that it can enable usage of the same modular OHC design in multiple vehicle types and models, thereby decreasing production, design and maintenance costs.

In one or more of the above embodiments, the computer-implemented method can further comprise transmitting information from the vehicle to a modular overhead console mounted in the vehicle, and determining type, model and functionality associated with the vehicle based on the transmitted information. An advantage of such a computer-implemented method is that it can enable usage of the same modular OHC design in multiple vehicle types and models, thereby decreasing production, design and maintenance costs.

In one or more of the above embodiments, the computer-implemented method can further comprise determining type, model and functionality associated with the vehicle based on a pin configuration of the vehicle connected to the modular OHC, collecting sensor information form one or more sensors located within the modular OHC, transmitting sensor data from the modular OHC to one or more computers located within the vehicle, and displaying the sensor information on a display located within the vehicle. An advantage of such a computer-implemented method is that it can enable usage of the same modular OHC design in multiple vehicle types and models, thereby decreasing production, design and maintenance costs.

According to an embodiment, a computer program product can comprise a computer readable storage medium having program instructions embodied therewith, the program instructions embodied therewith, the program instruction executable by a processor to cause the processor to: determine type, model and functionality associated with a vehicle, configure a modular overhead console to provision one or more functionalities and services associated with a vehicle, wherein the modular overhead console is located within the interior of the vehicle. An advantage of such a computer program product is that it can enable usage of the same modular OHC design in multiple vehicle types and models, thereby decreasing production, design and maintenance costs.

In one or more of the above embodiments, the computer program product can further comprise program instructions to cause the processor to: collect sensor information from one or more sensors located within the modular overhead console and display the sensor information on a display located within the vehicle.

In one or more of the above embodiments, the determination of type, model and functionality associated with the vehicle is based on a pin configuration connecting the vehicle to the modular overhead console. An advantage of such a computer program product is that it can enable usage of the same modular OHC design in multiple vehicle types and models, thereby decreasing production, design and maintenance costs.

In one or more of the above embodiments, the determination of type, model and functionality associated with the vehicle is based on information transmitted from the vehicle to the modular overhead console. An advantage of such a computer program product is that it can enable usage of the same modular OHC design in multiple vehicle types and models, thereby decreasing production, design and maintenance costs.

### DESCRIPTION OF THE DRAWINGS

One or more exemplary embodiments are described below in the Detailed Description section with reference to the following drawings.
FIG. 1 illustrates the multiple systems integrated into the modular OHC system body, in accordance with one or more embodiments described herein.
FIG. 2 illustrates a block diagram of an example, non-liming system that facilitates operation of a modular OHC in accordance with one or more embodiments described herein.
FIG. 3 illustrates the OHC system integrating the functionality of the window electronic module (WEM), in accordance with one or more embodiments described herein.
FIG. 4 illustrates the placement of sensors and functions of a modular OHC system, in accordance with one or more embodiments described herein.
FIG. 5 illustrates a diagram of an example mounting configuration for a modular OHC, in accordance with one or more embodiments described herein.
FIG. 6 illustrates a sensor functions and placement on the top portion of a modular OHC, in accordance with one or more embodiments described herein.
FIG. 7 illustrates a flow diagram of a non-limiting, example computer-implemented method that facilitates operation of a modular overhead console as described herein.
FIG. 8 illustrates an operating environment for implementing various aspects of this disclosure, in accordance with one or more embodiments described herein.
FIG. 9 illustrates a cloud computing environment, in accordance with one or more embodiments described herein.
FIG. 10 illustrates a set of functional abstraction layers provided by a cloud computing environment, in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed and/or implied information presented in the preceding Background and/or Summary sections, and/or in this Detailed Description section.

As used herein, the term "sensor" can refer to any one or more of visual, thermal, biosignature, electrical signature, light and/or chemical sensors, lidar, radar, sonar and/or any other sensor.

Vehicle sensor systems have increased in complexity and have thus placed limits on vehicle design. For example, components of vehicle sensor systems are commonly found throughout a vehicle's rooftop. Therefore, typical placement and implementation of vehicle sensor systems place design constraints on vehicles, leading to increased vehicle size and/or decreased interior space due to the inclusion of the sensor systems. Additionally, these restrictions can extent to the material composition of the vehicle. For example, existing vehicle sensor systems limit the ability of designers to utilize glass roofs, therefore decreasing the amount of natural sunlight and scenery for drivers and passengers to enjoy. In pursuing higher levels of integration and modularity in overhead console systems (OHC), vehicle designers can operate with greater flexibility and the modular OHCs can be utilized in more than one type of vehicle, thereby decreasing production and maintenance costs associated with the vehicles.

One or more of these embodiments are now described with reference to the figures, where like referenced numerals are used to refer to like elements throughout. In the following description, for purposes of explanation, numerous specific details are set forth in order to provide a more thorough understanding of the one or more embodiments. It is evident in one or more cases, however, that the one or more embodiments can be practiced without these specific details. Further, it should be appreciated that the embodiments depicted in one or more figures described herein are for illustration only, and as such, the architecture of embodiments is not limited to the systems, devices and/or components depicted therein, nor to any particular order, connection and/or coupling of systems, devices and/or components depicted therein.

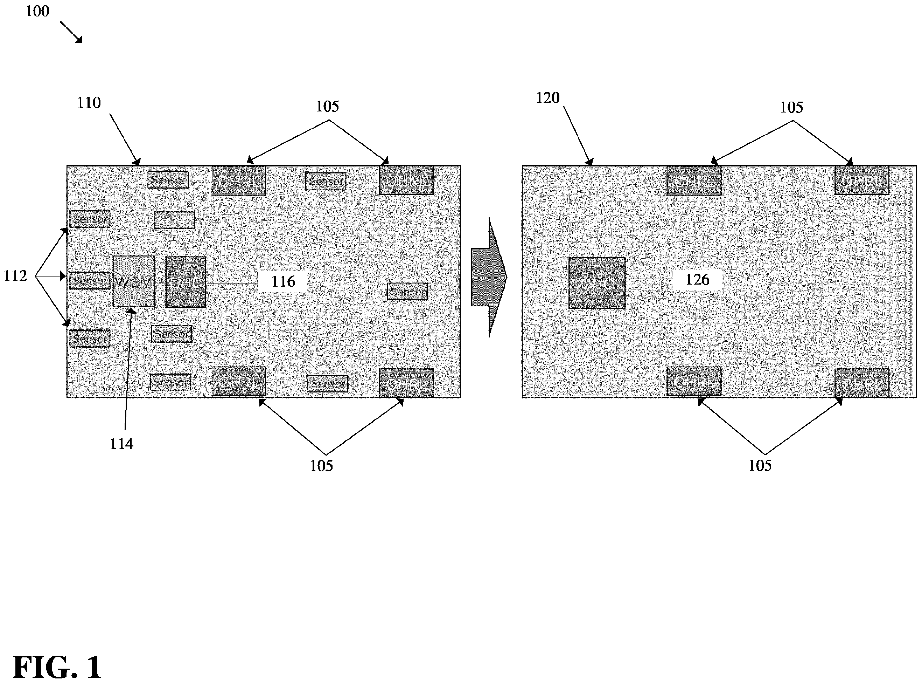

FIG. 1 illustrates how a conventional vehicle sensor system 110, can be simplified using to a modular vehicle sensor system 120 utilizing a modular OHC as described herein. As shown herein, conventional vehicle sensor system 110 comprises multiple sensors 112, a window electronic module (WEM) 114 to control operations of the multiple sensors 112, interior lights 105, and an overhead console 116 to allow a person within the vehicle to input commands or controls to the multiple sensors 112, the WEM 114 and/or the interior lights 105. Accordingly, the components of vehicle sensor system 110 place restrictions on the design and material composition of a vehicle comprising vehicle sensor system 110. For example, each of the multiple sensors 112 may require separate mountings, power connection, and/or data connections, thereby requiring the design of a vehicle to accommodate the space, weight, and mounting points needed to include the multiple sensors 112 and the WEM 114.

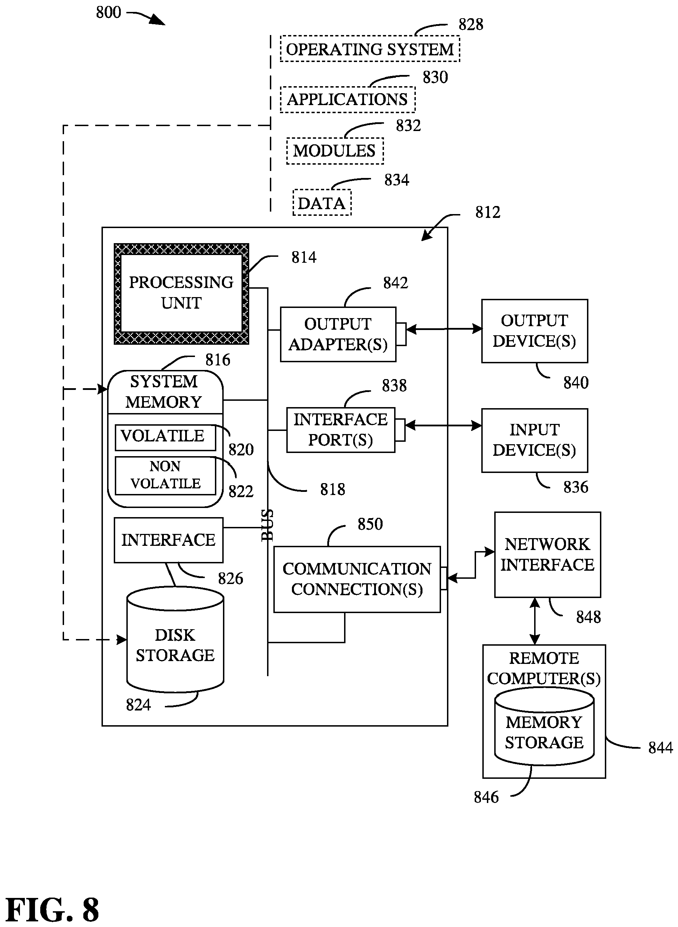

As shown by modular vehicle sensor system 120, a modular OHC 126 can alleviate these design restrictions. In an embodiment, modular OHC can comprise a computer operating environment, such as that more fully described below in reference to FIG. 8, to perform one or more functions described herein. Additionally, in an embodiment, the modular OHC 126 can comprise hardware component to enable modular OHC 126 to provide one or more functionalities related to the vehicle. For example, rather than utilizing multiple sensors spread throughout the vehicle, as shown in vehicle sensor system 110, the modular OHC 126 can comprise one or more sensors related to functionality of the vehicle, as well as components to operate the one or more sensors (e.g., a memory, a processor, etc.). For example, in an embodiment, the one or more sensors can comprise at least one of a traffic sensor, a weather sensor (e.g., for weather outside the vehicle), an interior climate sensor (e.g., for the climate inside the vehicle), a voice recognition sensor, a camera, a lidar sensor, a radar sensor, a facial recognition sensor, or an infrared sensor. Additionally, the modular OHC 126 can comprise other components, such as overhead lights, a rearview mirror, controls to operate one or more functions of the vehicle (e.g., power windows, vehicle controls, sensor controls, and/or climate controls) and/or other components related to vehicle functionality. By centralizing these components within the modular OHC 126, design restrictions due to a vehicle sensor system can be reduced. For example, by including the one or more sensors within the modular OHC, the amount of power connections, cables, and/or sensor mounting points within a vehicle can be reduced, thereby decreasing vehicle costs, increasing interior space, and/or enabling use of different materials, such as more glass within the vehicle roof.

In one or more embodiments, modular OHC 126 can be utilized in multiple different vehicle types. For example, the modular OHC 126 can determine the type, model and/or functionality associated with a vehicle, and then self-configure to provision and/or provide one or more functionalities associated with the vehicle. For example, the modular OHC 126 can determine that the type and/or model of the vehicle includes a road lane detection or assistance function. The modular OHC 126 can then utilize one or more sensors, (e.g., a camera, a traffic sensor, a lidar sensor, an infrared sensor etc.) to pass data collected by the one or more sensors to a central vehicle computer that utilizes the data to perform the lane detection functionality. If the modular OHC determines that the model or vehicle type does not include a lane detection function, then the modular OHC will not provision the one or more sensors to collect data related to the lane detection function. In an embodiment, the modular OHC 126 can determine vehicle functionality based on a pin configuration of a connection between the modular OHC 126 and the vehicle. For example, based on the number, type and/or placement of one or more pins connecting the modular OHC 126 to the vehicle, the modular OHC 126 can determine vehicle type, model and the functions of the vehicle. For example, the modular OHC 126 can comprise a memory that stores a list of vehicle types, pin configurations for each type of vehicle, and the functionalities of each vehicle type. Accordingly, the modular OHC 126 can store information indicating a that a vehicle type A includes a function B. If the modular OHC 126 determines that the vehicle the modular OHC 126 is mounted within is of type A, then the modular OHC 126 can provisions sensors and/or other hardware or software components to enable function B.

In another embodiment, the modular OHC 126 can determine the type, model and functionality of the vehicle based on information transmitted from the vehicle. For example, data from a central vehicle computer can be transmitted (e.g., through a physical pin connection, a wireless signal, a hardware signal, an optical signal, etc.) notifying the modular OHC of the type, model and/or functionality of the vehicle. Based on the transmitted data, the modular OHC 126 can then provision one or more functionality accordingly. In a further embodiment, the modular OHC 126 can comprise an artificial learning component that learns the functionalities of a vehicle type or model based on functions and data requested by a central vehicle computer or an operator of the vehicle. In one or more embodiments, the modular OHC 126 can be connected to a cloud computing system in order to provision one or more functionalities of the vehicle.

In an embodiment, copies of the same modular OHC 126 can be included in different types and models of vehicles. For example, as the modular OHC 126 can determine the type, model and functionality of a vehicle, the modular OHC 126 can be produced as a standardized component and installed in multiple vehicle types and models, rather than designing and producing OHCs for individual types and models of vehicle. This standardization thereby enables lower design and production costs, as well as decreasing vehicle repair costs as the modular OHC can be utilized as a repair part across multiple types and models of vehicles. Accordingly, the modular OHC 126 described herein can enable decreased production and maintenance costs of vehicles.

In the one or more of the embodiments, integrations extend beyond sensory information. For example, the modular OHC 126 can integrate features of the windshields and mirrors such as defrosting and dimming. Furthermore, with a potentially fully glass roof for a vehicle, the modular OHC 126 can enable a polarization feature in the rooftop to decrease sun intensity and reflections. In another embodiment, the vehicle sunroof can comprise nano solar components that can facilitate powering of the modular OHC 126, or components located within the vehicle. It should be appreciated that in an embodiment, the modular OHC 126 can facilitate and or relate to functionality of a specific portion of the vehicle, such as a roof, the front of the vehicle, the rear of the vehicle, and/or any other region of the vehicle. In a further embodiment, the modular OHC 126 can receive power from and/or provision power to other parts of the vehicle. For example, if the vehicle contains a component enabling window polarization of a glass roof, the modular OHC 126 can provide power to said component to enable the polarization functionality. It should be appreciated that use of any wired or wireless power transmission method is envisioned.

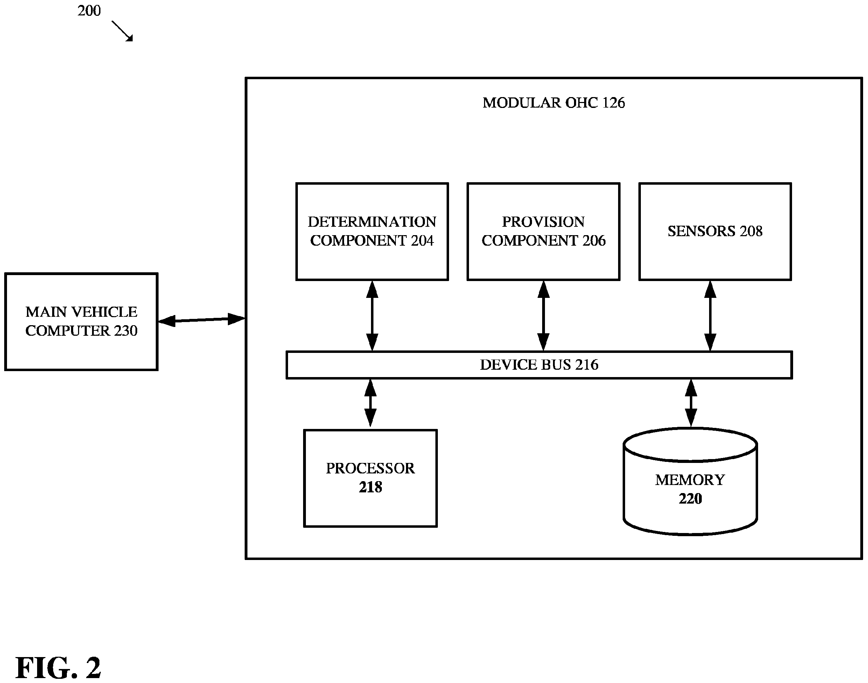

FIG. 2 illustrates a block diagram of an example, non-liming system 200 that facilitates operation of a modular OHC 126 in accordance with one or more embodiments described herein. Repetitive description of like elements and/or processes employed in respective embodiments is omitted for sake of brevity.

System 200 can comprise modular OHC 126. Modular OHC 126 can comprise a determination component 204, a provision component 206, one or more sensors 208, a device bus 216, a processor 218 and a memory 220. System 200 can further comprise a main vehicle computer 230. Determination component 204 can determine a type, model and functionality associated with a vehicle that modular OHC 126 is mounted within. For example, as described above in greater detail in reference to FIG. 1, determination component 204 can determine a type, model and functionality associated with the vehicle based on a pin configuration connecting the modular OHC 126 to the vehicle. In another example, determination component 204 can determine type, model and functionality base on information transmitted from the vehicle, such as from main vehicle computer 230 to the modular OHC 126. Provision component 206 can provision one or more functionalities or services of the vehicle based on the determination. For example, based on the determination that the vehicle includes a window polarization feature, provision component 206 can send instructions to hardware in the window to polarize based on an input from a driver or passenger of the vehicle. In a further embodiment, provision component 206 can activate an input device located on the modular OHC 126 or within the vehicle to enable a driver or passenger to control a function or service associated with the vehicle. In a further embodiment, provision component 206 can operate sensors 208 to enable a functionality or service associated with the vehicle, and/or transmitted data collected from the sensors 208 to the main vehicle computer 230 for processing. A more detail description of a computing environment is provided below in FIG. 8.

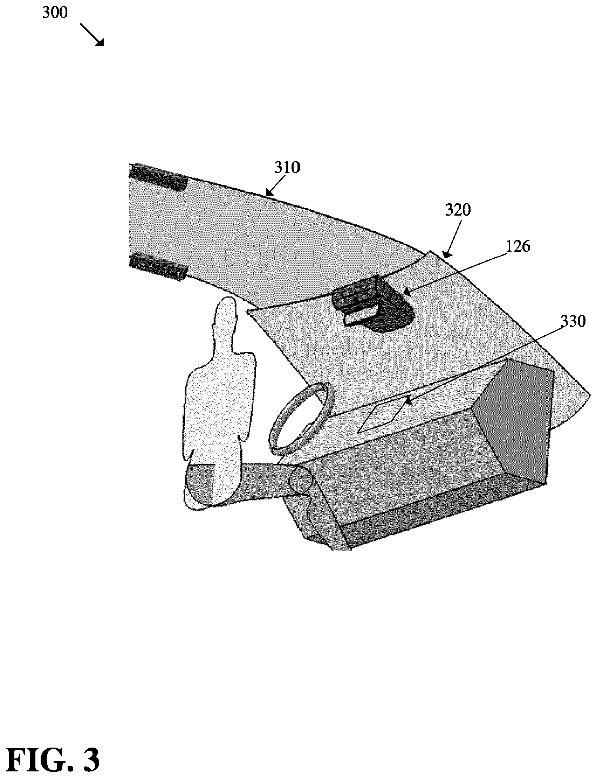

FIG. 3 illustrates a diagram 300 of an example of the modular OHC integrating functionality related to front of a vehicle, in accordance with one or more embodiments, described herein. Repetitive description of like elements and/or processes employed in respective embodiments is omitted for sake of brevity. As shown, the vehicle can comprise a roof 310, a windshield 320, the modular OHC 126 and a display 330. As shown, the modular OHC 126 can be mounted to the interior to the vehicle where the roof 310 and windshield 320 meet. It should be appreciated that in one or more embodiments alternative placement and/or mounting locations of the modular OHC 126 is envisioned. In an embodiment, the modular OHC 126 can provision one or more functions based on the vehicle. For example, as the modular OHC 126 is mounted near the roof 310 and the windshield 320, if the modular OHC 126 determines that the vehicle includes the functionality to polarize glass within the roof 310 or the windshield 320, the modular OHC 126 can enable these functionalities. In one or more embodiments, the modular OHC 126 can comprise controls to operate one or more functionalities of the vehicle, such as buttons, switches, touch screens voice controls, or another control method. In another embodiment, the modular OHC 126 can connect to controls located at other places within the vehicle. For example, the modular OHC 126 can receive inputs from buttons, switches or touch screens located on the doors, the steering wheel and/or the center console or dashboard of the vehicle. Other locations of controls within the vehicle are envisioned. In an embodiment, the modular OHC 126 can cause information from one or more sensors included within the modular OHC 126 to appear on a display, such as display 330. Alternative placements and types of displays are envisioned. In a further embodiment, the modular OHC 126 can send data to one or more central computers within the vehicle that can process the data. The processed data can then be output to a display, such as display 330.

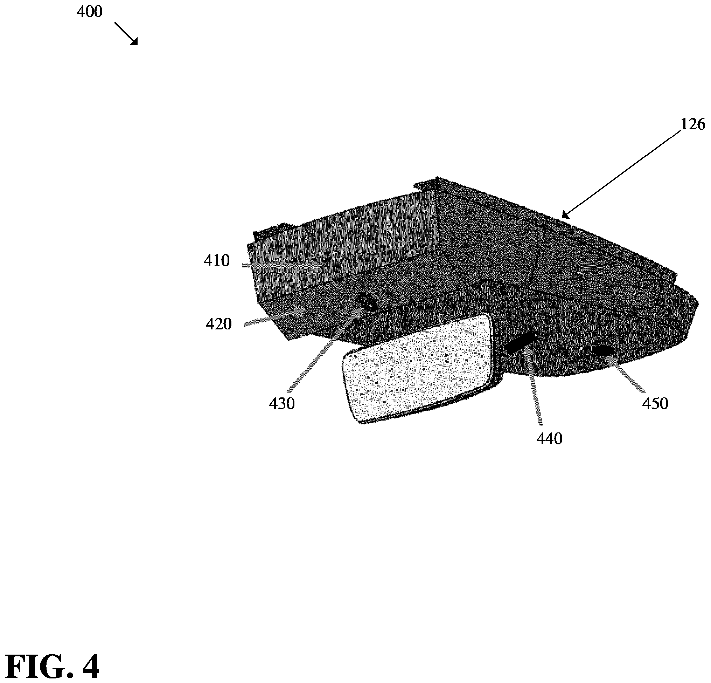

FIG. 4 illustrates a diagram 400 of an example modular OHC 126 in accordance with one or more embodiments described herein. Repetitive description of like elements and/or processes employed in respective embodiments is omitted for sake of brevity.

As shown, modular OHC 126 can comprise a section 410 for outputting signals within the vehicle, such as an internal radar sensor or an ultra-wide band transmitter and receiver. The modular OHC 126 can further comprise a second section 420 for communication, comprising components such a s microphone, controls for hazard lights, and/or a system that outputs an SOS alert to relevant authorities in the event of a crash or vehicle malfunction. The modular OHC 126 can further comprise one or more internal cameras 430, such as infrared cameras or visible light cameras to record video of the interior of the vehicle. The modular OHC 126 can further comprise a space 440 for interior lighting, such as overhead lighting for passenger convince. The modular OHC 126 can additionally comprise outgoing notification lights 450, such as lights to indicate to other vehicles, drivers and pedestrians that the vehicle is operating in an autonomous driving mode. It should be appreciated that modular OHC 126 is not limited to the components and/or location described herein and can comprise any components and/or placement of components to enable functionalities of the vehicle.

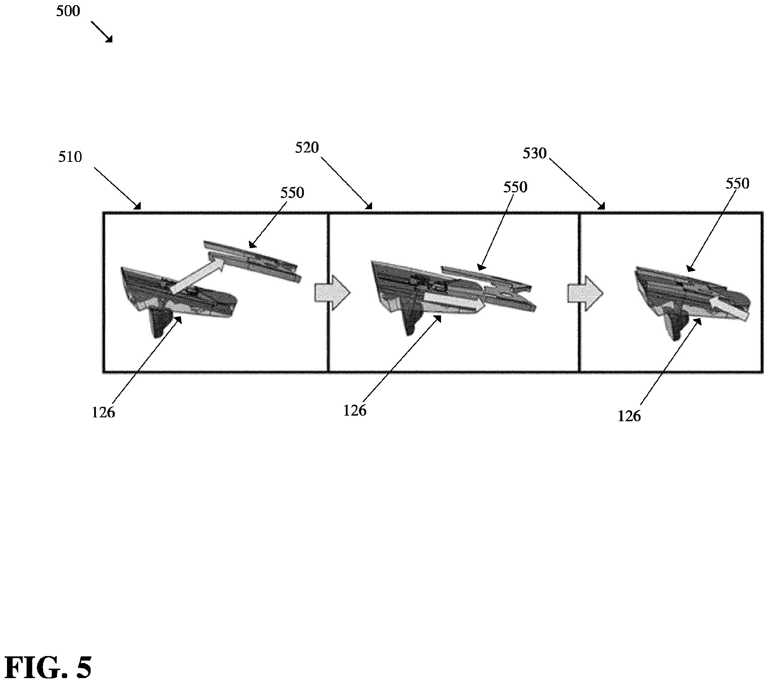

FIG. 5 illustrates a diagram of an example mounting configuration 500 for a modular OHC 126 in accordance with one or more embodiments described herein. Repetitive description of like elements and/or processes employed in respective embodiments is omitted for sake of brevity.

In an embodiment, mounting configuration 500 can comprise mounting brackets 550. As shown in step 510, guidance pins on the sides of the modular OHC 126 can be guided into position of the mounting brackets 550. As shown in step 520, the modular OHC 126 can be slid forward into the mounting brackets 550. As shown in step 530, the modular OHC 126 can be secured into the corrected position in the mounting brackets by locks, screws, clips, catches, and/or any other physical means of securing the modular OHC 126 into place. In an embodiment, once secured into place, the modular OHC 126 can then interface with the vehicle through a pin connection and/or another wired or wireless connection method. In an embodiment, the modular OHC 126 can be removed by undoing the apparatus used to secure the modular OHC 126 into place and sliding the modular OHC 126 out of the mounting brackets 550. It should be appreciated that the mounting system and method describe herein in relation to FIG. 5 is merely illustrative of one, non-limiting, example of a mounting system and that other mounting configurations, systems, method, and/or positions are envisioned.

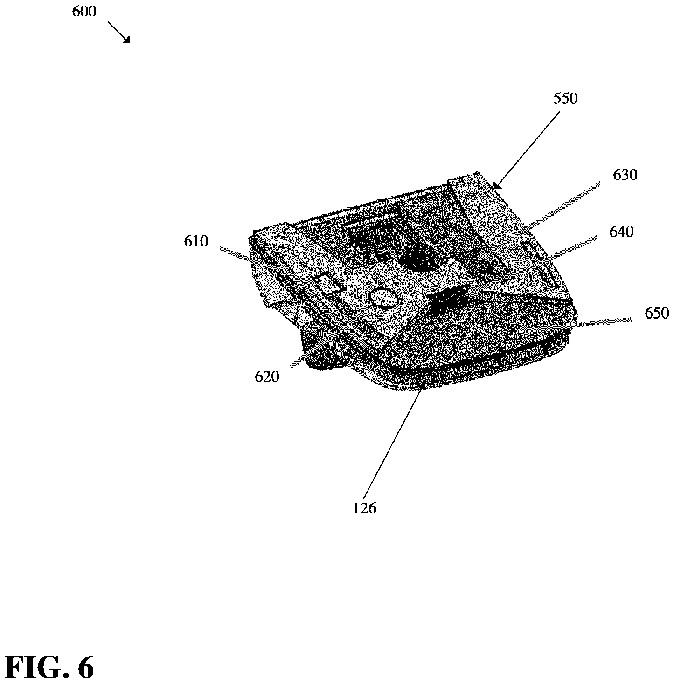

FIG. 6 illustrates a diagram 600 of an example modular OHC 126 in accordance with one or more embodiments described herein. Repetitive description of like elements and/or processes employed in respective embodiments is omitted for sake of brevity.

As shown, the modular OHC 126 is mounted in mounting brackets 550. The modular OHC 126 can comprise an interior climate sensor 610, a weather sensor 620, a vehicle-to-everything communication (V2X) component 630, a front facing camera 640 and a glare shield 650. In an embodiment, the modular OHC 126 can utilize the various components described above to provide one or more functionalities based on the vehicle type as described above in reference to FIG. 1. For example, if the modular OHC 126 determines that the vehicle supports autonomous driving, the modular OHC 126 can send data from the front camera 640 to a central vehicle computer to enable an autonomous driving function. It should be appreciated that modular OHC 126 is not limited to the components and/or location described herein and can comprise any components and/or placement of components to enable functionalities of the vehicle. It should also be appreciated that the physical design of modular OHC 126 is not limited to the physical design shown.

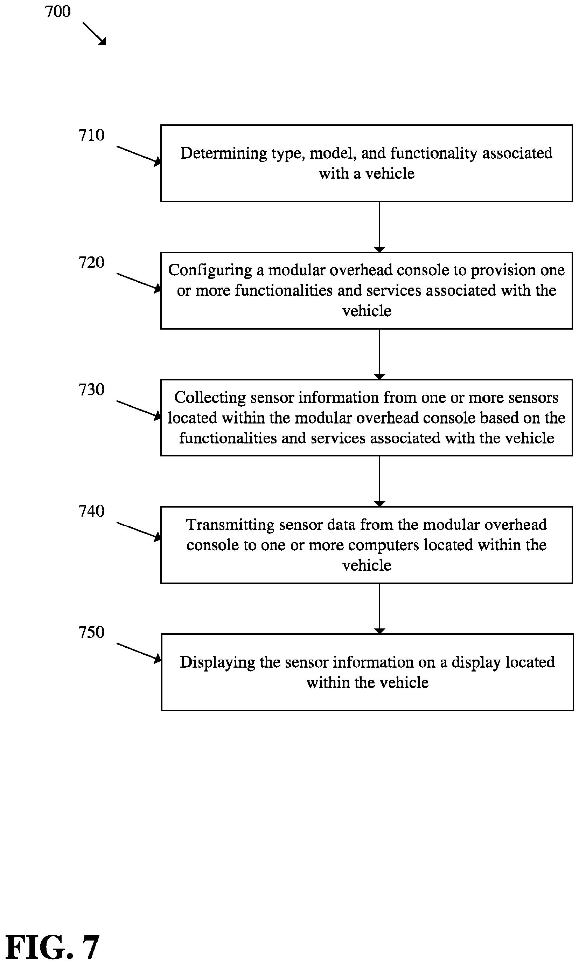

FIG. 7 illustrates a flow diagram of a non-limiting, example computer-implemented method 700 that facilitates operation of a modular overhead console as described herein. Repetitive description of like elements and/or processes employed in respective embodiments is omitted for sake of brevity.

At 710, computer-implemented method 700 can comprise determining, by a processor, type, model and functionality associated with a vehicle. For example, as described above in reference to FIG. 1, a modular overhead console, comprising a computer operating system, can be mounted within the interior of a vehicle. Based on a pin configuration and/or data transmitted from the vehicle to the modular OHC, the modular OHC can determine the type and model of the vehicle and functionalities and/or services associated with the vehicle.

At 720, computer-implemented method 700 can comprise configuring, by the processor, the modular OHC to provision one or more functionalities and services associated with the vehicle. For example, as described above in reference to FIG. 1, if the modular OHC determines that the vehicle has a window polarization feature, then the modular OHC can configure itself to enable a control located on the modular OHC or within the vehicle to control the polarization of a window. Similarly, if the vehicle has a lane detection functionality, the modular OHC can activate one or more sensors located within the modular OHC, such as a camera, that is utilized for the lane detection functionality.

At 730, computer-implemented method 700 can comprise collecting, by the processor, sensor information from the one or more sensors located within the modular overhead console, based on the functionality and services associated with the vehicle. For example, if the modular OHC activates a camera based on the vehicle having a lane detection functionality, as described above in step 720, the modular OHC can collect data from the camera, and/or another sensor of the one or more sensors related to an activated function of the vehicle.

At 740, computer-implemented method 700 can comprise transmitting, by the processor, sensor data from the modular OHC to one or more computers located within the vehicle. For example, the modular OHC can transmit data collected from the camera at 730 to a central vehicle computer that processes the camera data to perform the lane detection feature. In another embodiment, the processing of the data can be handled directly by a processor located within the modular OHC.

At 750, computer-implemented method 750 can comprise displaying, by the processor, sensor information on a display located within the vehicle. For example, data collected from the one or more sensor at 730 can be displayed on a display located within the vehicle. In an embodiment data processed by the modular OHC or a central vehicle computer can be displayed.

An advantage of the above described systems, devices, methods and/or computer program products is that by concentrating various component and sensors into a modular OHC, design constraints of the vehicle can be reduced and space within the interior of the vehicle can be increased. For example, by concentrating sensors from the windshield and the roof of a vehicle into a modular OHC, the modular OHC reduces the number of needed mounting points and cables running along the roof of the vehicle, thereby enabling vehicle roofs with increased amounts of glass. Another advantage of the above described systems, devices, methods and/or computer program products is that by enabling the modular OHC to be utilized in multiple different vehicle types and models, costs associated with design, manufacture and maintenance of the vehicle types and model can be decreased. Additionally, by utilizing a modular mounting system as described herein, modular OHCs can easily be installed and uninstalled from vehicles, thereby enabling easier maintenance and upgrading of the vehicle when compared to designs utilizing OHCs specific to a single vehicle type or model.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance and/or illustration. For the avoidance of doubt, the subject matter disclosed herein is not limited by such examples. In addition, any aspect and/or design described herein as an "example" and/or "exemplary" is not necessarily to be construed as preferred and/or advantageous over other aspects or designs, nor is it meant to preclude equivalent exemplary structures and/or techniques known to those of ordinary skill in the art.

The description of the one or more various embodiments provided herein has been presented for purposes of illustration but is not intended to be exhaustive and/or limited to the one or more embodiments disclosed. One or more modifications and/or variations will be apparent to those of ordinary skill in the art without departing from the scope and/or spirit of the described embodiments. The terminology used herein was chosen to best explain the principles of the embodiments, practical application and/or technical improvement over technologies found in the marketplace, and/or to enable others of ordinary skill in the art to understand the embodiments disclosed herein.

For simplicity of explanation, the computer-implemented methodologies are depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts can be required to implement the computer-implemented methodologies in accordance with the disclosed subject matter. In addition, those skilled in the art will understand and appreciate that the computer-implemented methodologies could alternatively be represented as a series of interrelated states ν*ia* a state diagram or events. Additionally, it should be further appreciated that the computer-implemented methodologies disclosed hereinafter and throughout this specification are capable of being stored on an article of manufacture to facilitate transporting and transferring such computer-implemented methodologies to computers. The term article of manufacture, as used herein, is intended to encompass a computer program accessible from any computer-readable device or storage media.

In order to provide a context for the various aspects of the disclosed subject matter, FIG. 8 as well as the following discussion are intended to provide a general description of a suitable environment in which the various aspects of the disclosed subject matter can be implemented. FIG. 8 illustrates a block diagram of an example, non-limiting operating environment in which one or more embodiments described herein can be facilitated. Repetitive description of like elements employed in other embodiments described herein is omitted for sake of brevity.

With reference to FIG. 8, a suitable operating environment 800 for implementing various aspects of this disclosure can also include a computer 812. The computer 812 can also include a processing unit 814, a system memory 816, and a system bus 818. The system bus 818 couples system components including, but not limited to, the system memory 816 to the processing unit 814. The processing unit 814 can be any of various available processors. Dual microprocessors and other multiprocessor architectures also can be employed as the processing unit 814. The system bus 818 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1394), and Small Computer Systems Interface (SCSI).

The system memory 816 can also include volatile memory 820 and nonvolatile memory 822. The basic input/output system (BIOS), containing the basic routines to transfer information between elements within the computer 812, such as during start-up, is stored in nonvolatile memory 822. Computer 812 can also include removable/non-removable, volatile/non-volatile computer storage media. FIG. 8 illustrates, for example, a disk storage 824. Disk storage 824 can also include, but is not limited to, devices like a magnetic disk drive, floppy disk drive, tape drive, Jaz drive, Zip drive, LS-100 drive, flash memory card, or memory stick. The disk storage 824 also can include storage media separately or in combination with other storage media. To facilitate connection of the disk storage 824 to the system bus 818, a removable or non-removable interface is typically used, such as interface 826. FIG. 8 also depicts software that acts as an intermediary between users and the basic computer resources described in the suitable operating environment 800. Such software can also include, for example, an operating system 828. Operating system 828, which can be stored on disk storage 824, acts to control and allocate resources of the computer 812.

System applications 830 take advantage of the management of resources by operating system 828 through program modules 832 and program data 834, e.g., stored either in system memory 816 or on disk storage 824. It is to be appreciated that this disclosure can be implemented with various operating systems or combinations of operating systems. A user enters commands or information into the computer 812 through input device(s) 836. Input devices 836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 814 through the system bus 818 via interface port(s) 838. Interface port(s) 838 include, for example, a serial port, a parallel port, a game port, and a universal serial bus (USB). Output device(s) 840 use some of the same type of ports as input device(s) 836. Thus, for example, a USB port can be used to provide input to computer 812, and to output information from computer 812 to an output device 840. Output adapter 842 is provided to illustrate that there are some output devices 840 like monitors, speakers, and printers, among other output devices 840, which require special adapters. The output adapters 842 include, by way of illustration and not limitation, video and sound cards that provide a means of connection between the output device 840 and the system bus 818. It should be noted that other devices and/or systems of devices provide both input and output capabilities such as remote computer(s) 844.

Computer 812 can operate in a networked environment using logical connections to one or more remote computers, such as remote computer(s) 844. The remote computer(s) 844 can be a computer, a server, a router, a network PC, a workstation, a microprocessor based appliance, a peer device or other common network node and the like, and typically can also include many or all of the elements described relative to computer 812. For purposes of brevity, only a memory storage device 846 is illustrated with remote computer(s) 844. Remote computer(s) 844 is logically connected to computer 812 through a network interface 848 and then physically connected via communication connection 850. Network interface 848 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 850 refers to the hardware/software employed to connect the network interface 848 to the system bus 818. While communication connection 850 is shown for illustrative clarity inside computer 812, it can also be external to computer 812. The hardware/software for connection to the network interface 848 can also include, for exemplary purposes only, internal and external technologies such as, modems including regular telephone grade modems, cable modems and DSL modems, ISDN adapters, and Ethernet cards.

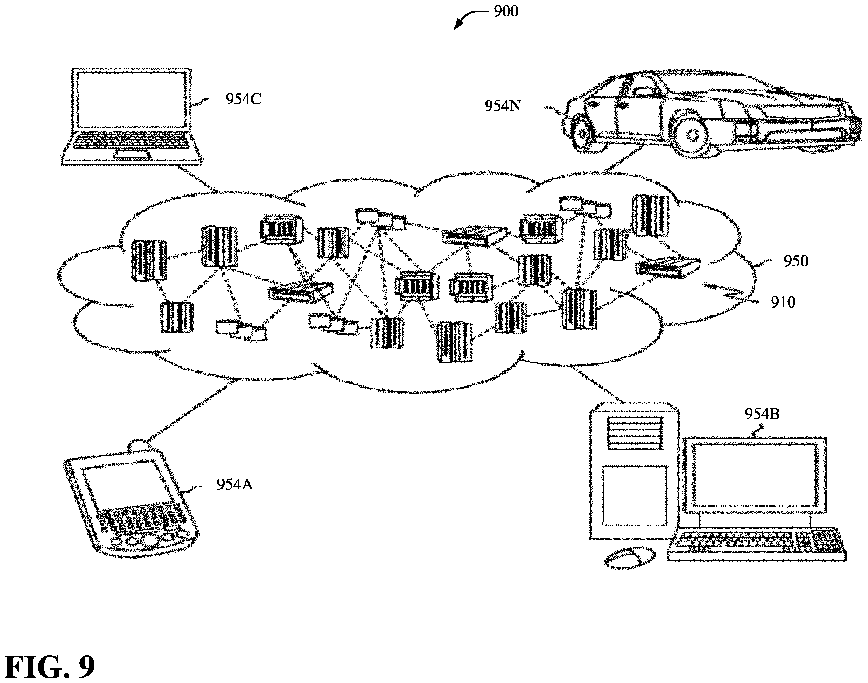

Referring now to FIG. 9, an illustrative cloud computing environment 950 is depicted. As shown, cloud computing environment 950 includes one or more cloud computing nodes 910 with which local computing devices used by cloud consumers, such as, for example, personal digital assistant (PDA) or cellular telephone 954A, desktop computer 954B, laptop computer 954C, and/or automobile computer system 954N can communicate. Nodes 910 can communicate with one another. They can be grouped (not shown) physically or virtually, in one or more networks, such as Private, Community, Public, or Hybrid clouds as described hereinabove, or a combination thereof. This allows cloud computing environment 950 to offer infrastructure, platforms and/or software as services for which a cloud consumer does not need to maintain resources on a local computing device. It is understood that the types of computing devices 954A-N shown in FIG. 9 are intended to be illustrative only and that computing nodes 910 and cloud computing environment 950 can communicate with any type of computerized device over any type of network and/or network addressable connection (e.g., using a web browser).

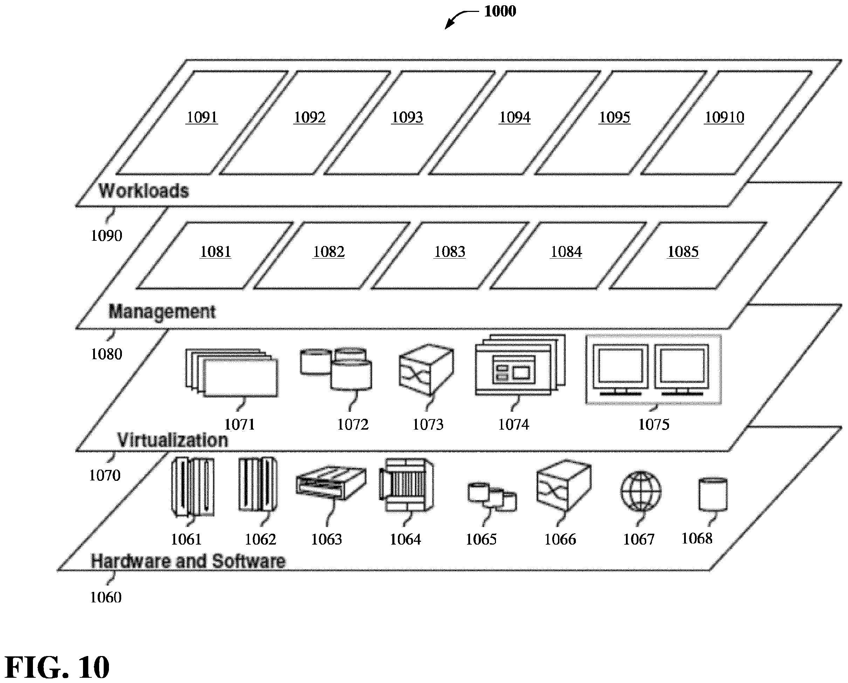

Referring now to FIG. 10, a set of functional abstraction layers provided by cloud computing environment 950 (FIG. 9) is shown. It should be understood in advance that the components, layers, and functions shown in FIG. 10 are intended to be illustrative only and embodiments of the invention are not limited thereto. As depicted, the following layers and corresponding functions are provided:

Hardware and software layer 1060 includes hardware and software components. Examples of hardware components include: mainframes 1061; RISC (Reduced Instruction Set Computer) architecture based servers 1062; servers 1063; blade servers 1064; storage devices 1065; and networks and networking components 1066. In some embodiments, software components include network application server software 1068 and database software 668.

Virtualization layer 1070 provides an abstraction layer from which the following examples of virtual entities can be provided: virtual servers 1071; virtual storage 1072; virtual networks 1073, including virtual private networks; virtual applications and operating systems 1074; and virtual clients 1075.

In one example, management layer 1080 can provide the functions described below. Resource provisioning 1081 provides dynamic procurement of computing resources and other resources that are utilized to perform tasks within the cloud computing environment. Metering and Pricing 1082 provide cost tracking as resources are utilized within the cloud computing environment, and billing or invoicing for consumption of these resources. In one example, these resources can include application software licenses. Security provides identity verification for cloud consumers and tasks, as well as protection for data and other resources. User portal 1083 provides access to the cloud computing environment for consumers and system administrators. Service level management 1084 provides cloud computing resource allocation and management such that required service levels are met. Service Level Agreement (SLA) planning and fulfillment 1085 provide pre-arrangement for, and procurement of, cloud computing resources for which a future requirement is anticipated in accordance with an SLA.

Workloads layer 690 provides examples of functionality for which the cloud computing environment can be utilized. Non-limiting examples of workloads and functions which can be provided from this layer include: mapping and navigation 1091; software development and lifecycle management 1092; virtual classroom education delivery 1093; data analytics processing 1094; transaction processing 1095; and gradient weight compression software 1096.

The present invention can be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

Further aspects of the invention are provided by the subject matter of the following clauses:
1. A vehicle control system, comprising:
   a processor that executes computer executable components stored in memory; and
   a modular overhead console that:
      determines type, model and functionality associated with a vehicle; and
      self-configures to provision one or more functionalities and services associated with the vehicle.
2. The system of any preceding clause, wherein the modular overhead console further:
   couples to an interior portion of the vehicle associated with the vehicle control system.
3. The system of claim of any preceding clause, wherein the modular overhead console wirelessly communicates with components of the vehicle.
4. The system of any preceding clause, wherein the modular overhead console comprises one or more components to provide one or more functionalities to the vehicle.
5. The system of any preceding clause, wherein the modular overhead console provisions power to one or more vehicle components.
6. The system of any preceding clause, wherein the modular overhead console provides functionalities for a defined portion of the vehicle.
7. The system of any preceding clause, wherein the modular overhead console determines type, model and functionality associated with the vehicle based on a pin configuration coupling the vehicle to the modular overhead console.
8. The system of any preceding clause, wherein the modular overhead console comprises one or more sensors.
9. The system of clause 8, wherein the one or more sensors comprise at least one of a traffic sensor, a weather sensor, an interior climate sensor, a voice recognition sensor, a camera, a lidar sensor, a radar sensor, a facial recognition sensor, or an infrared sensor.
10. The system of any preceding clause, wherein the overhead modular console comprises an artificial intelligence component that implements automated action to provision the one or more functionalities.
11. The system of clause 8, wherein the overhead modular console causes information from the one or more sensors to be displayed on a display in the interior of the vehicle.
12. A computer-implemented method comprising:
   determining type, model and functionality associated with a vehicle; and
   configuring a modular overhead console to provision one or more functionalities and services associated with the vehicle.
13. The computer-implemented method of any preceding clause, further comprising:
   transmitting information from the vehicle to a modular overhead console mounted in the vehicle;
   determining type, model and functionality associated with the vehicle based on the transmitted information.
14. The computer-implemented method of any preceding clause, further comprising:
   determining type model and functionality associated with the vehicle based on a pin configuration of the vehicle connected to the modular overhead console;
   collecting sensor information from one or more sensors located within the modular overhead console;
   transmitting sensor data from the modular overhead console to one or more computers located within the vehicle; and
   displaying the sensor information on a display located within the vehicle.
15. The computer-implemented method of clause 14, wherein the one or more sensors comprise at least one of a traffic sensor, a weather sensor, an interior climate sensor, a voice recognition sensor, a camera, a lidar sensor, a radar sensor, a facial recognition sensor, or an infrared sensor.
16. A computer program product comprising a computer readable storage medium having program instructions embodied therewith, the program instructions executable by a processor to cause the processor to:
   determine, by the processor, type, model and functionality associated with a vehicle; and
   configure, by the processor, a modular overhead console to provision one or more functionalities and services associated with a vehicle, wherein the modular overhead console is mounted within the interior of the vehicle.
17. The computer-program product of any preceding clause, wherein the program instructions are further executable by the processor to cause the processor to:
   collect, by the processor, sensor information from one or more sensors located within the modular overhead console; and
   display, by the processor, the sensor information on a display located within the vehicle.
18. The computer-program product of any preceding clause, wherein the determination of type, model and functionality associated with the vehicle is based on a pin configuration connecting the vehicle to the modular overhead console.
19. The computer-program product of any preceding clause, wherein the determination of type, model and functionality associated with the vehicle is based on information transmitted from the vehicle to the modular overhead console.
20. The computer-program product of clause 17, wherein the one or more sensors comprise at least one of a traffic sensor, a weather sensor, an interior climate sensor, a voice recognition sensor, a camera, a lidar sensor, a radar sensor, a facial recognition sensor, or an infrared sensor.

## Claims

1. A vehicle control system, comprising:
a processor that executes computer executable components stored in memory; and
a modular overhead console that:
determines type, model and functionality associated with a vehicle; and
self-configures to provision one or more functionalities and services associated with the vehicle.

2. The vehicle control system of claim 1, wherein the modular overhead console further: couples to an interior portion of the vehicle associated with the vehicle control system.

3. The vehicle control system of any preceding claim, wherein the modular overhead console wirelessly communicates with one or more components of the vehicle.

4. The vehicle control system of any preceding claim, wherein the modular overhead console comprises one or more components to provide the one or more functionalities to the vehicle.

5. The vehicle control system of any preceding claim, wherein the modular overhead console provisions power to one or more vehicle components.

6. The vehicle control system of any preceding claim, wherein the modular overhead console provides functionalities for a defined portion of the vehicle.

7. The vehicle control system of any preceding claim, wherein the modular overhead console determines type, model and functionality associated with the vehicle based on a pin configuration coupling the vehicle to the modular overhead console.

8. The vehicle control system of any preceding claim, wherein the modular overhead console comprises one or more sensors.

9. The vehicle control system of any preceding claim, wherein the one or more sensors comprise at least one of a traffic sensor, a weather sensor, an interior climate sensor, a voice recognition sensor, a camera, a lidar sensor, a radar sensor, a facial recognition sensor, or an infrared sensor.

10. The vehicle control system of any preceding claim, wherein the modular overhead console comprises an artificial intelligence component that implements automated action to provision the one or more functionalities.

11. The vehicle control system of any preceding claim, wherein the modular overhead console causes information from the one or more sensors to be displayed on a display in the interior of the vehicle.

12. A computer-implemented method comprising:
determining type, model and functionality associated with a vehicle; and
configuring a modular overhead console to provision one or more functionalities and services associated with the vehicle.

13. The computer-implemented method of claim 12, further comprising:
transmitting, by a system operatively coupled to a processor, information from the vehicle to the modular overhead console mounted in the vehicle; and
determining, by the system, type, model and functionality associated with the vehicle based on the transmitted information.

14. The computer-implemented method of any preceding claim, further comprising:
determining, by the system, type model and functionality associated with the vehicle based on a pin configuration of the vehicle connected to the modular overhead console;
collecting, by the system, sensor information from one or more sensors located within the modular overhead console;
transmitting, by the system, sensor data from the modular overhead console to one or more computers located within the vehicle; and
displaying, by the system, the sensor data on a display located within the vehicle.

15. The computer-implemented method of claim 14, wherein the one or more sensors comprise at least one of a traffic sensor, a weather sensor, an interior climate sensor, a voice recognition sensor, a camera, a lidar sensor, a radar sensor, a facial recognition sensor, or an infrared sensor.
